# EUROPEAN PATENT SPECIFICATION

(11) **EP 4 484 130 B1**
(45) Date of publication and mention of the grant of the patent: **09.12.2026**
(21) Application number: 24185826.5
(22) Date of filing: 01.07.2024
(51) Int. Cl.: B29C 64/153, B22F 10/28, B22F 10/73, B22F 12/13, B22F 12/00, B22F 12/37, B22F 12/41, B22F 12/45, B22F 12/60, B22F 12/70, B29C 64/241, B29C 64/245, B29C 64/282, B29C 64/357, B33Y 10/00, B33Y 30/00

(54) **SHROUDED BUILD PLATE FOR POWDER BED FUSION ADDITIVE PRINTER**
UMMANTELTE BAUPLATTE FÜR PULVERBETTFUSIONSADDITIVDRUCKER
PLAQUE DE CONSTRUCTION CARÉNÉE POUR IMPRIMANTE ADDITIVE PAR FUSION À LIT DE POUDRE

(30) Priority: 30.06.2023 US 202363511474 P; 30.06.2023 US 202363511479 P; 30.06.2023 US 202363511482 P; 30.06.2023 US 202363511486 P; 10.08.2023 US 202363518741 P; 28.06.2024 US 202418758555
(43) Date of publication of application: 01.01.2025
(73) Proprietor: RTX Corporation, Farmington, CT 06032 (US)
(72) Inventor: BINEK, Lawrence, East Hartford, 06118 (US); BOYER, Jesse, East Hartford, 06118 (US)
(74) Representative: Dehns

(56) References cited:
- US-A1- 2018 345 370
- US-A1- 2019 202 101

## Description

### BACKGROUND

The present invention relates generally to powder bed fusion additive manufacturing and, more particularly, to a powder bed fusion additive manufacturing drive mechanism for annular geometries.

Powder bed fusion (PBF) additive manufacturing is an additive manufacturing, or 3-D printing, technology that uses a laser or other energy source such as an electron beam to sinter or fuse metallic or polymeric particles together in a layer-by-layer process. PBF is typically used as an industrial process to make near net shape parts. Some PBF processes sinter the build powder particles, while others melt and fuse the build powder particles. Laser Powder Bed fusion (PBF-LB) is also known as direct metal laser sintering (DMLS).

Build plates serve as a foundation upon which a PBF build (i.e., the "workpiece" or "part") is built. Build plates for PBF additive manufacturing systems typically have a rectangular, square, or circular geometry, which provides the flexibility to support a wide variety of build shapes. As parts being made with PBF additive manufacturing processes get bigger, though, rectangular, square, or circular build plates present some disadvantages for builds having an annular shape. The disadvantages include the volume of unconsolidated (i.e., unused) powder that accumulates in the central opening of the annular-shaped build, the amount of time required to recoat the build plate with fresh build powder, and the amount of time required to raster the build head across the build plate. While it might be possible to reuse the unconsolidated powder for other purposes, reuse can be cumbersome. Accordingly, the relatively large amount of unconsolidated powder associated with annular-shaped builds, the time spent recoating the build plate, and the time spent rastering the build head over the build plate represent "waste" factors in the manufacturing process that would be preferable to avoid.

US 2018/0345370 A1 discloses a prior art apparatus for continuous powder-based additive manufacturing of a large annular object.

US 2019/0202101 A1 discloses a prior art additive manufacturing system with a build platform that defines a continuous workflow path and is configured rotate about a build platform axis.

### SUMMARY

According to an aspect of this invention, there is provided a build plate for a powder bed fusion (PBF) additive manufacturing system as claimed in claim 1. Some embodiments of this aspect are provided in claims dependent from claim 1.

According to another aspect of this invention, there is provided a method of making an annular part with a PBF additive manufacturing system as claimed in claim 11. Some embodiments of this aspect are provided in claims dependent from claim 11.

### BRIEF DESCRIPTION OF THE DRAWINGS

Fig. 1 is an illustration of one type of annular-shaped build that can be made with a powder bed fusion (PBF) additive manufacturing system.
Fig. 2A is an overhead schematic of a PBF additive manufacturing system having an annular-shaped build plate.
Fig. 2B is an overhead schematic of a PBF additive manufacturing system having an annular-shaped built plate with apertures to collect excess build powder according to the invention.
Fig. 2C is a cross-section of Fig. 2B along line B-B.
Fig. 3 is an elevation schematic of a PBF additive manufacturing system having an annular-shaped build plate.
Fig. 4 is an elevation schematic of a build piston of a PBF additive manufacturing system having an annular-shaped build.
Fig. 5 is an elevation schematic of the build piston of Fig. 4 showing a worm gear screw, bearing sleeve, and worm gear drive.
Fig. 6 is an elevation schematic of the build piston of Fig. 4 showing linear actuators to control the vertical translation and rotation of the drive shaft.
Fig. 7A is a schematic of a build head for use in a PBF additive manufacturing system having an annular-shaped build plate.
Fig. 7B is a schematic of a one configuration of a recoater for use in a PBF additive manufacturing system having an annular-shaped build plate.
Fig. 7C is a schematic of a another configuration of a recoater for use in a PBF additive manufacturing system having an annular-shaped build plate.
Fig. 7D is a schematic of a recoater having a constant sharp edge for use in a PBF additive manufacturing system having an annular-shaped build plate.
Fig. 7E is a schematic of a recoater having a constant radiused edge for use in a PBF additive manufacturing system having an annular-shaped build plate.
Fig. 7F is a schematic of a chevron-shaped recoater for use in a PBF additive manufacturing system having an annular-shaped build plate.
Fig. 7G is an overhead view of the hybrid recoater of Fig. 7E on a PBF additive manufacturing system having an annular-shaped build plate.
Fig. 7H is a schematic of a hybrid configuration of a recoater for use in a PBF additive manufacturing system having an annular-shaped build plate.
Fig. 7I is a schematic of the hybrid recoater of Fig. 7H overlaid on the cross-section of Fig. 2C.
Fig. 7J is an overhead view of the hybrid recoater of Fig. 7H on a PBF additive manufacturing system having an annular-shaped build plate.
Fig. 8 is a schematic of an optical head array for use in a PBF additive manufacturing system having an annular-shaped build plate of the subject disclosure.
Fig. 9 is a graph showing a zone of preferred operating conditions for a PBF additive manufacturing system having an annular-shaped build plate.
Fig. 10 is a schematic of an integrated X-ray CT scanner for use in a PBF additive manufacturing system having an annular-shaped build plate.
Fig. 11 is a schematic representation of a part built using conventional, layer-by-layer PBF additive manufacturing process.
Fig. 12 is another schematic representation of a part built using conventional, layer-by-layer PBF additive manufacturing process.
Fig. 13 is a schematic representation of a part built using the disclosed, continuous helical layer PBF additive manufacturing process.
Fig. 14 is another schematic representation of a continuous helical layer formed with the disclosed PBF additive manufacturing process.

### DETAILED DESCRIPTION

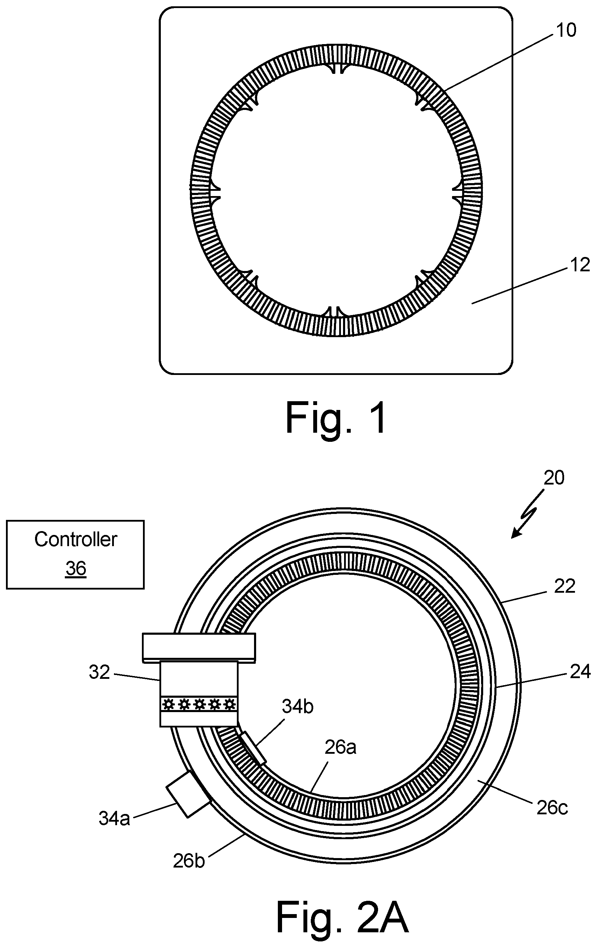

Powder bed fusion (PBF) additive manufacturing is an option to make near net shape parts with various geometries. Parts having an annular shape-particularly those with relatively large diameters can be a challenge. Examples of such annular-shaped parts include parts for gas turbine engines (e.g., compressor stages, turbine stages, combustor cans and combustion chambers, cases, etc.), other aerospace applications, and numerous commercial applications. Fig. 1 shows a nonlimiting, exemplary gas turbine engine compressor stage 10 made using a PBF additive manufacturing process. Parts such as the gas turbine engine compressor stage 10 and other parts can be valuable for original equipment assemblies and for in-service sustainment requirements. Generally, annular-shaped parts, such as the gas turbine engine compressor stage 10, can be printed in their entirety in a large format PBF additive manufacturing machine. Because the part envelope of conventional large format machines is typically rectangular, square, or circle shaped with correspondingly shaped rectangular, square, or circular build plates 12, such machines are not ideal for annular-shaped parts because the central opening of annular-shaped parts results in a large area of unconsolidated build powder within the annular ring. Depending on the PBF additive manufacturing process used to make such parts, the large area of unconsolidated build powder can end up being "wasted," which drives up the expense of making such parts with conventional PBF additive manufacturing methods. Accordingly, there is often not a business case to support using conventional PBF additive manufacturing methods for annular-shaped parts.

In addition to challenges with efficient use of build powder when using conventional PBF additive manufacturing methods for annular-shaped parts, the cycle time for large format conventional PBF additive manufacturing systems can be challenging. The architecture of conventional PBF additive manufacturing systems requires that the energy source (e.g., laser or electron beam) track the rectilinear cartesian coordinates of the part on the rectangular or square build plates. For annular-shaped parts, this means that the energy source in a conventional PBF additive manufacturing system spends significant time tracking over portions of the build powder bed that will not be consolidated to make the annular-shaped parts. As a result, a significant portion of the build time for such parts is non-productive in that the energy source is tracking over the build powder bed without consolidating any of the build powder. The large amount of non-productive build time is another type of "waste" that further drives up the expense of making such parts with conventional PBF additive manufacturing methods.

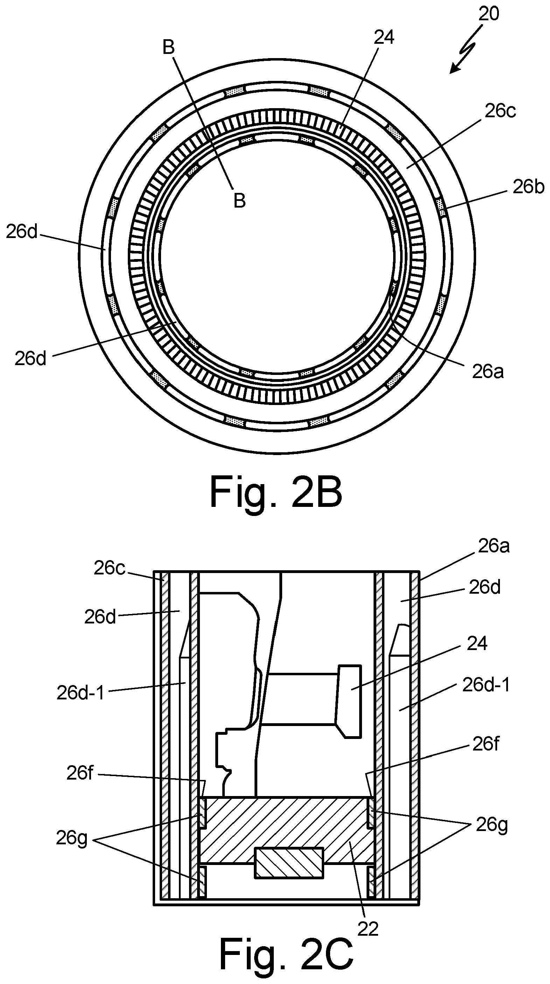

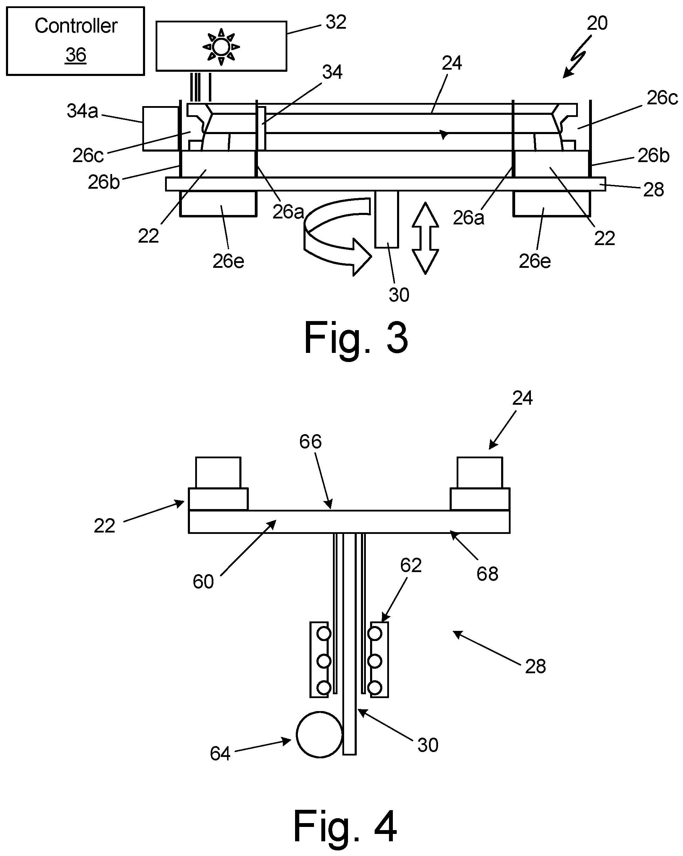

As shown in Figs. 2A and 3, this application discloses a PBF additive manufacturing system **20** and a PBF additive manufacturing drive mechanism system that replaces the conventional rectangular or square build plate with a rotating annular build plate **22** for making annular-shaped parts **24.** The rotating annular build plate **22** is surrounded by walls (or shrouds) **26,** including inner radius walls/shrouds **26a** and outer radius walls/shrouds **26b,** to define a build area **26c** that contains a powder bed (not shown) of build powder during the PBF additive manufacturing process and positioned on a build piston **28.** The walls/shrouds 26 extend vertically from a junction **26f** (see Fig. 2C) with the build plate **22** to define the build area **26c.** The build piston **28** is configured to rotate the build plate **22** and walls/shrouds **26** in a continuous circular motion and to translate down as the PBF additive manufacturing process progresses to form part **24.** The build plate **22** moves in concert with the build piston **28.** The rotation and downward translation of the build piston **28** and build plate **22** allows for the part **24** to build up without stepping or interruption. As described in more detail below, the part **24** can be formed from a continuous, helical layer of consolidated build powder that overlays itself as the part **24** is built.

Fig. 2B is a schematic of the build plate **22** discussed above showing more detail of the walls/shrouds **26.** As shown in Fig. 2B, and according to the invention, each of the inner radius walls/shrouds **26a** and outer radius walls/shrouds **26b** include a plurality of apertures **26d.** The plurality of apertures **26d** are configured to collect excess build powder distributed over the build area **26c** by the recoater **42** as discussed below. The plurality of apertures **26d** are further configured to direct the excess build powder through the inner radius walls/shrouds **26a** and outer radius walls/shrouds **26b** to an excess build powder reservoir **26e** (see Fig. 3) located below the build plate **22.** The plurality of apertures **26d** may include any number of apertures **26d** appropriate for a particular application and may have any appropriate shape, such as the elongated oval shape shown in Fig. 2B or any other appropriate shape.

Fig. 2C shows a cross-section of the build plate **22** along line B-B of Fig. 2B. Fig. 2C shows that the plurality of apertures **26d** extend through a vertical length of the inner radius walls/shrouds **26a** and outer radius walls/shrouds **26b** to direct excess build powder to the excess build powder reservoir **26e.** Depending on the application, the plurality of apertures **26d** can include one or more internal dividers **26d-1** to facilitate flow of excess build powder through the plurality of apertures **26d.** The one or more internal dividers **26d-1** can have any appropriate geometry (e.g., chamfered, etc.) and may extend for some or all of the vertical length of the plurality of apertures **26d.** A plurality of seals **26g** positioned between the inner radius walls/shrouds **26a** and outer radius walls/shrouds **26b** and the build plate **22** are configured to prevent build powder migrating out of the build area **26c** through the junction **26f** between the inner radius walls/shrouds **26a** and outer radius walls/shrouds **26b** and the build plate **22.** The seals **26g** can be made from any material and have any design appropriate for performing their intended function.

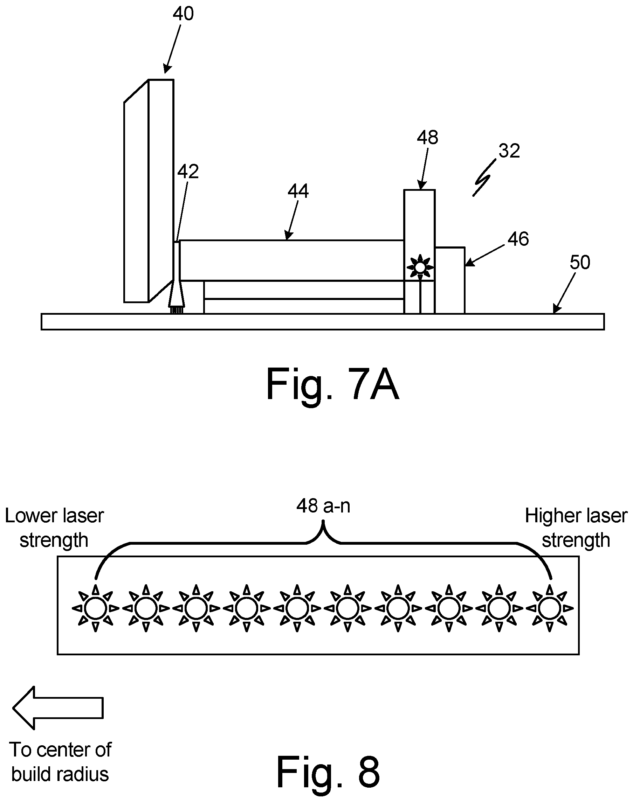

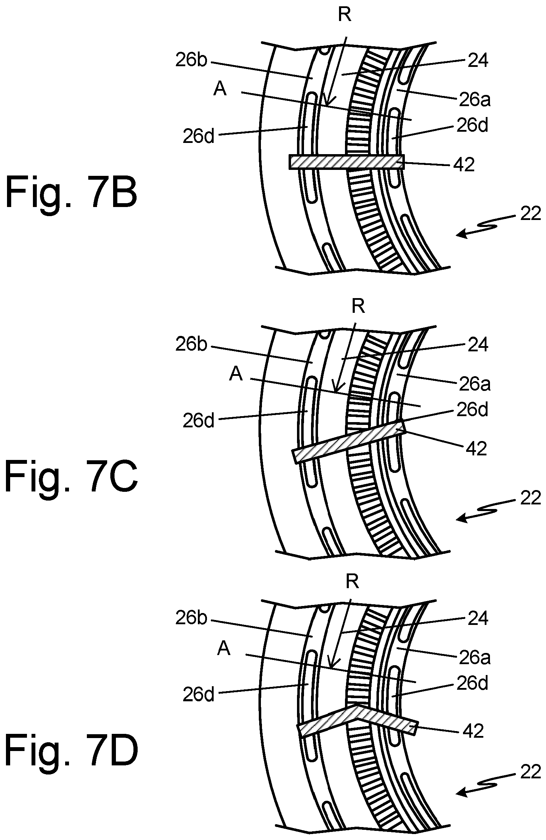

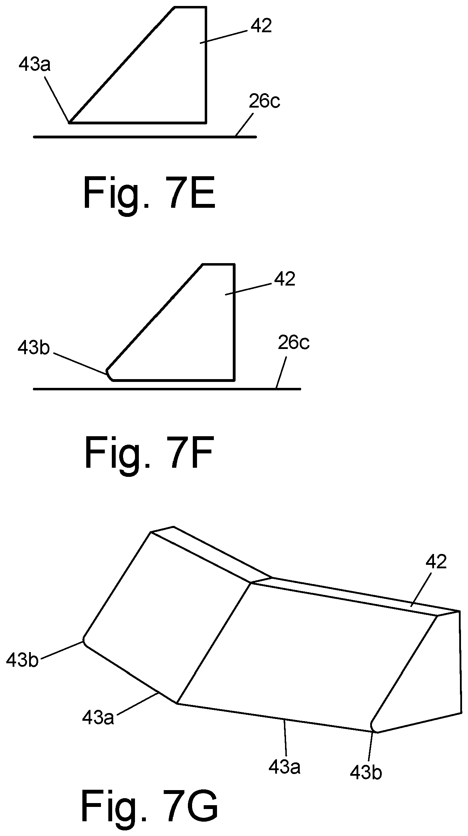

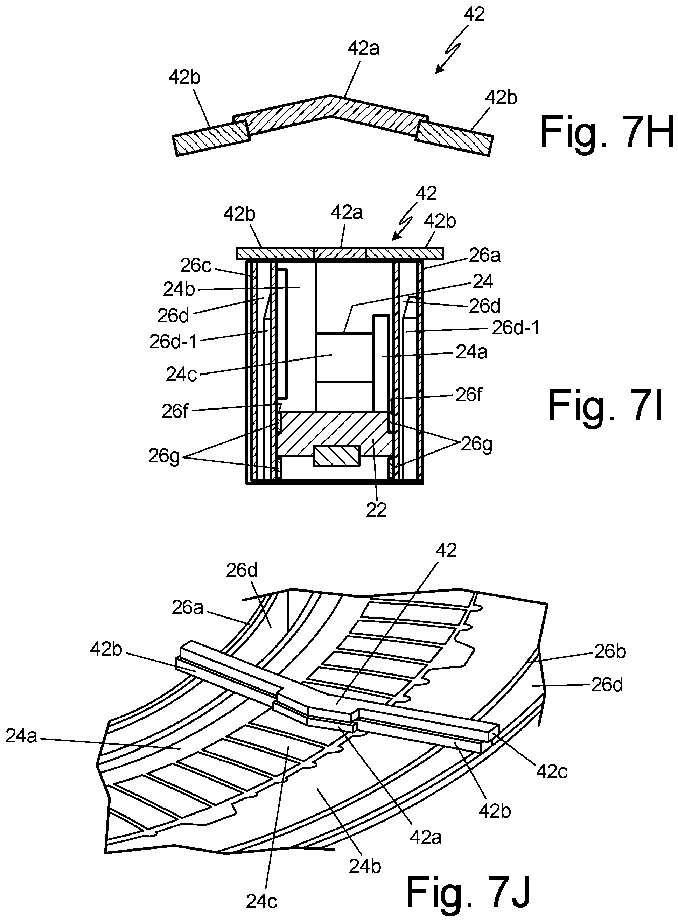

Fig. 3 shows excess build powder reservoir **26e** in schematic form. While Fig. 3 shows excess build powder reservoir **26e** mounted to build piston **28,** the excess build powder reservoir **26c** can be mounted in any location and on any structure that permits collection of excess build powder captured by the plurality of apertures **26b** and directed to the excess build powder reservoir **26e** when the PBF additive manufacturing system **20** is in operation. Excess build powder captured in the excess build powder reservoir **26e** can be handled in a variety of ways. For example, the excess build powder can be analyzed for potential reuse on the PBF additive manufacturing system **20,** on another PBF additive manufacturing system, or for some other purpose. Depending on the design of the PBF additive manufacturing system **20,** the excess build powder can be recycled to the powder dispensing mechanism **40** (see Fig. 7) for reuse in the same build campaign from which the excess build powder was collected. If the excess build powder captured in the excess build powder reservoir **26e** is not deemed fit for reuse, the excess build powder can be discarded using appropriate disposal methods.

Fig. 4 is a more detailed schematic of the build piston **28** discussed above. The build piston **28** includes a build platform **60,** a drive shaft **30,** a bearing sleeve **62,** and a drive shaft actuation mechanism **64.** The build platform **60** includes a top portion **66** that engages with the build plate **22** and a bottom portion **68** that engages with the drive shaft **30.** One end of the drive shaft **30** is attached to the build platform **60** at or near the bottom portion **68** of the build platform **60.** The drive shaft **30** can be attached to the build platform **60** at or near the center of the bottom portion **68** of the build platform **60** to facilitate rotation of the build platform **60.** The drive shaft **30** transmits drive forces from the drive shaft actuation mechanism **64** to the build platform **60 to** cause the build platform **60** to rotate and translate vertically. The bearing sleeve **62** surrounds the drive shaft **30** and ensures linear alignment of the drive shaft **30.** The bearing sleeve **62** may include any type of bearing suitable to ensure smooth rotation and linear alignment of the drive shaft **30,** for example, ball bearings, roller bearings, and other types of bearings. The drive shaft actuation mechanism **64** is configured to rotate the drive shaft at a rate, which can be a continuous rate, that is coordinated with, and in some examples, coupled to the drive shaft **30** rate of vertical translation, to move the build platform **60** helically. The drive shaft **30** can also be configured to be removable from the build piston **28** so that a different configuration of drive shaft **30** can be used depending on a desired helical layer structure of the part **24** (see the discussion below) being produced by the PBF additive manufacturing system **20.**

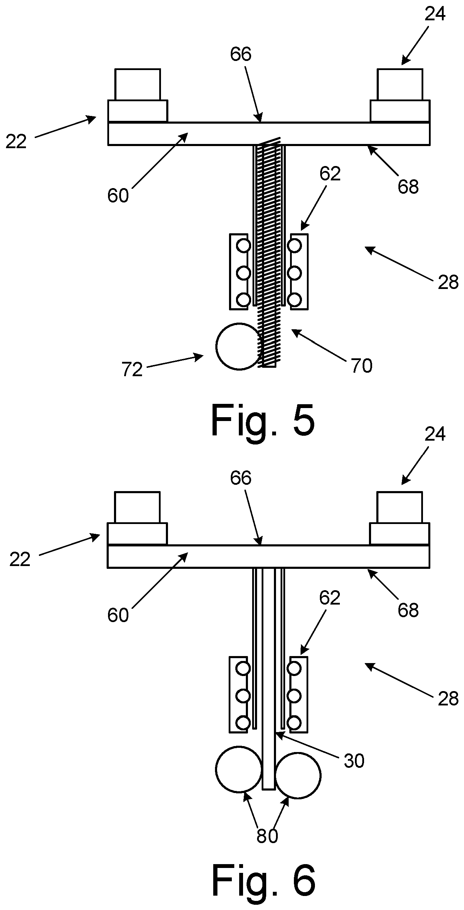

Fig. 5 is a schematic of another example of the build piston **28** of this disclosure, where the drive shaft **30** includes a worm gear screw **70** and the drive shaft actuation mechanism **64** includes a worm gear drive **72.** As discussed above, the bearing sleeve **62** ensures smooth rotation and linear alignment of the worm gear screw **70.** The worm gear screw **70** has a helically structured threading with a pitch, pitch angle, thread angle, and diameter that is appropriate to achieve a desired helical layer structure of the part **24** being produced by the PBF additive manufacturing system **20** (see the description below of the helical layer structure of the part **24).** The worm gear screw **70** pitch, pitch angle, and thread angle, can be constant or variable across the length of the worm gear screw **70,** depending on the desired helical layer structure of the part **24** being produced by the PBF additive manufacturing system **20.** The worm gear drive **72** can be configured to rotate at a constant or variable speed in a clockwise or counterclockwise direction, depending on the desired helical layer structure of the part **24** being produced by the PBF additive manufacturing system **20.** The worm gear drive **72** can be decoupled from the worm gear screw **70** and exchanged for a worm drive **72** with a different drive diameter and/or pattern of threading to alter the helical layer structure of the part **24** being produced by the PBF additive manufacturing system **20.**

Fig. 6 is a schematic of another example of the build piston **28** of this disclosure, where the drive shaft actuation mechanism **64** includes linear actuators **80** configured to rotate the drive shaft **30** and translate the drive shaft **30** vertically. The rotation and vertical translation of the drive shaft **30** can be configured to be independent from each other or can be coupled to each other. The speed and direction at which the linear actuators **80** move the drive shaft **30** can be variable and is selected to generate a desired helical layer structure of the part **24** being produced by the PBF additive manufacturing system **20.** In some examples, the linear actuators **80** can be configured to uncouple their rate of rotation and rate of vertical translation temporarily to achieve a desired helical layer structure of the part **24** being produced by the PBF additive manufacturing system **20.** Additionally, the examples of Figs. 5 and 6 can be combined such that an example includes a worm gear screw **70** as the drive shaft **30** and both a worm gear drive **72** and linear actuators **80** as the drive shaft actuation mechanism **64.** In this example, either the worm gear drive **72** or the linear actuators **80** can engage to drive the drive shaft **30** at any given time so that both the worm gear drive **72** and the linear actuators **80** are not driving the drive shaft **30** at the same time. In this example, the worm gear drive **72** and the linear actuators **80** can both include the full range of features as discussed above.

The PBF additive manufacturing system **20** can also include a multi-function build head **32** positioned at a predetermined height over the build area **26c** that includes powder delivery mechanism, a recoater, a build powder preheater, a gas manifold, and an optical array as described in more detail below (see Figs. 7A and 8). Alternately, each element of the multi-function build head **32** can be provided independently or as separate sub-assemblies. For example, the recoater **42** can be integrated into the multi-function build head **32** as shown in Fig. 7A or it can be provided as a separate assembly. The recoater **42** is discussed in more detail below. The multi-function build head **32** can be a static component that covers the operating radius of the build plate **22** (i.e., build area **26c,** which is across the entire space between the walls **26** of the build plate **22)** while the build plate **22** rotates and/or can be configured to translate vertically (i.e., up and down in the z-axis) to maintain a desired distance between the multi-function build head **32** and the top layer of the build powder bed in the build area **26c** as the build campaign progresses. Additionally, the multi-function build head **32** can also be configured to translate radially across the build area **26c** to provide complete coverage of the build area **26c.** Regardless of configuration, the build head **32** covers the full build area **26c** of the build plate **22** as the build plate **22** rotates and translates down as described above. Although only a single build head **32** is shown in Figs. 2 and 3, any number of build heads **32** can be used in a particular PBF additive manufacturing system **20.** For example, a PBF additive manufacturing system **20** consistent with this disclosure can include 2, 3, 4, or even more build heads **32** spaced at selected intervals. While each of the multiple build heads **32** may be spaced at regular intervals, the build heads may also be spaced at irregular intervals if such a spacing is deemed advantageous. Additionally, a PBF additive manufacturing system **20** consistent with this disclosure can be configured such that the number of build heads **32** can be changed between build campaigns. For example, a single build head **32** can be used for a first build campaign, 3 build heads **32** (or any other number of build heads **32)** can be used for a subsequent second build campaign, and so on. The number of build heads **32** used for a particular build campaign can be determined based on the dimensions, complexity, build powder material, and other considerations for the part **24** to be built during the build campaign.

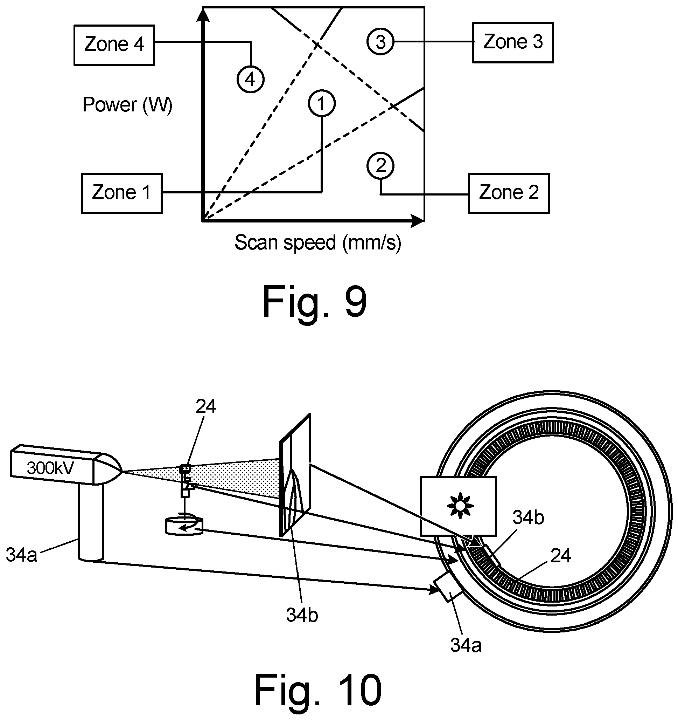

The PBF additive manufacturing system **20** can also include an x-ray computed tomography (CT or CAT) scan system **34,** including scan head **34a** and detector **34b,** as described in more detail below (see Fig. 10) to integrate a continuous inspection process into the disclosed PBF additive manufacturing process. Although only a single CT scan system **34** is shown in Figs. 2 and 3, any number of CT scan systems **34** can be used in a particular PBF additive manufacturing system **20.**

As discussed further below, the PBF additive manufacturing system **20** also includes a controller **36.**

Fig. 7A is a more detailed schematic of the multi-function build head **32** discussed above. The multi-function build head **32** provides a number of capabilities that enable the use of annular build plate **22** in a PBF additive manufacturing system **20.** The build head **32** includes a powder dispensing mechanism **40,** recoater **42,** powder heating element **44,** gas manifold **46,** and optical array **48,** which includes an energy source such as a laser or electron beam source. As discussed above, the build head **32** can remain stationary as the annular build plate **22** rotates, can be configured to translate vertically (i.e., up and down in the z-axis) to maintain a desired distance between the multi-function build head **32** and the build powder bed **50** as the build campaign progresses, and/or can be configured to translate radially across the build area **26c.** Translating the build head **32** and the optical array **48** in the z-axis and/or radially across the build area **26c** can contribute to repeatable consolidation of the part **24.**

The powder dispensing mechanism **40** is configured to distribute additional build powder over the part **24** after each portion of the continuous, helical layer is formed on the part **24** in a manner similar to the distribution of build powder in conventional PBF additive manufacturing systems. The recoater **42** spreads the build powder distributed by the powder dispensing mechanism **40** evenly across the powder bed **50** so that each portion of the continuous, helical layer of the part **24** has a desired (stacking axis) thickness. As discussed further below, due to the continuous rotation of the annular build plate **22** the continuous, helical layer of part **24** is deposited in a 2D plane having a pitch that reflects the build layer height. The powder heating element **44** heats unconsolidated build powder to facilitate complete, pore-free consolidation of the build powder. Each of the powder dispensing mechanism **40,** recoater **42,** and powder heating element **44** can be configured to operate similar to their counterparts in conventional PBF additive manufacturing systems.

As discussed above, the recoater **42** can be integrated into the multi-function build head **32** as shown in Fig. 7A or it can be provided as a separate assembly. Regardless of whether the recoater **42** is integrated into a multi-function build head **32** or is provided as a separate assembly, the recoater **42** should account for the rotational nature of the PBF additive manufacturing system **20** of this disclosure. For example, a recoater **42** with a traditional (i.e., "straight across") configuration as shown in Fig. 7B may not be suitable for the annular, rotating build plate **22** that is the subject of this disclosure. Other recoater **42** configurations, such as those shown in Figs. 7C and 7D, may be better suited to the annular, rotating build plate **22** that is the subject of this disclosure. Fig. 7C shows a recoater **42** having a single segment positioned at an acute angle relative to an axis A perpendicular to the direction of rotation **R** of the build plate **22.** Fig. 7D shows a recoater **42** having a chevron shape with two individual segments each positioned at an acute angle relative to an axis A perpendicular to the direction of rotation **R** of the build plate **22.** A person of ordinary skill will appreciate that the recoater **42** can also include more than two segments. The acutely angled recoater **42** of Fig. 7C and the chevron-shaped recoater **42** of Fig. 7D can have a sharp edge **43a** (Fig. 7E), radiused edge **43b** (Fig. 7F), a combination of a sharp edge **43a** and radiused edge **43b** (e.g., a radiused edge **43b** transitioning to a sharp edge **43a** transitioning back to a radiused edge **43b)** in contact with the powder bed. The recoater **42** can be made with any material appropriate for the application, such as a relatively hard, rigid material (e.g., a metallic material or a natural or artificial elastomer having a relatively high Shore hardness metric), a relatively soft, flexible material (e.g., a natural or artificial elastomer having a lower Shore hardness metric), brush with bristles of a selected hardness or a combination of materials. The material for the recoater **42** can be selected to provide a uniform density of power packing in the build area **26c** during build plate **22** rotation. As discussed above, the recoater **42** should be configured to direct excess build powder into the plurality of apertures **26d** in the inner radius wall **26a** and outer radius **wall 26b** to be collected in the excess build powder reservoir **26e.**

Figs. 7H to 7J show a hybrid recoater **42** that includes at least two regions, a first region **42a** and a second region **42b.** Each of the at least two regions **42a, 42b** has different mechanical properties selected to provide a desired distribution of build powder over selected portions of the powder bed. For example, the at least two regions **42a, 42b** of the recoater **42** can be made from rigid and/or flexible materials, such as a blade or brush with rigid and/or flexible bristles. For some applications, the recoater **42** can include a first region **42a** of relatively hard, rigid material and a second region **42b** of relatively soft, flexible material. The recoater **42** can have any suitable shape, such as the angled recoater **42** of Fig. 7C or the chevron-shaped recoater of Figs. 7D, 7G, 7H, and 7J. The recoater **42** may be a unitary structure or, as shown in Fig. 7J, include a frame **42c** that provides overall structure to the at least two regions **42a, 42b,** which may themselves be part of the unitary structure or may be removable and replaceable features such as blades.

As shown in Figs. 7H, 7I, and 7J, it may be desirable for the hybrid recoater **42** to use a first region **42a** made from a relatively hard, rigid material to distribute build powder over a characterizing feature **24c** of part **24** (e.g., a vane of gas turbine engine vane ring) and a second region **42b** made from a relatively soft, flexible material to distribute build powder over secondary features **24a, 24b** of part **24** (e.g., inner **24a** and outer **24b** shrouds of a gas turbine engine vane ring). Fig. 7H shows that there can be some overlap between the first region **42a** and the second region **42b.** The first region **42a** made from a relatively hard, rigid material and the second region **42b** made from a relatively soft, flexible material can be made any materials that are suitable to provide a uniform density of power packing in the build area **26c** during build plate **22** rotation. For example, the first region **42a** made from a relatively hard, rigid material can be a metallic material having a suitable Rockwell hardness metric, a natural or artificial elastomer having a relatively high Shore hardness metric (e.g., 80-100 Shore A for a rigid material or 50-75 Shore A for a semi-rigid material), a brush structure with stiff bristles, or another suitable material. The second region **42b** made from a relatively soft, flexible material can also be a metallic material with a lower Rockwell hardness metric than the first region **42a** made from a relatively hard, rigid material, a natural or artificial elastomer having a relatively low Shore hardness metric (e.g., 5-45 Shore A), or another suitable material. The second region **42b** made from a relatively soft, flexible material can also be a brush structure with soft bristles. A person of ordinary skill will recognize that the dimensions (e.g., thickness, shape, etc.) of the at least two regions **42a, 42b** also play a role in determining the mechanical properties of the at least two regions **42a, 42b.** The descriptions of the materials and dimensions of the at least two regions **42a, 42b** are nonlimiting in that the at least two regions **42a, 42b** can be made from any materials and have any dimensions that are suitable to provide a uniform density of power packing in the build area **26c** during build plate **22** rotation.

In some applications, the recoater **42** can include a first region **42a** having mechanical properties selected to provide a honing effect on the characterizing feature **24c** of the part **24** to be built on the PBF additive manufacturing system **20.** Similarly, the recoater **42** can include a second region **42b** having mechanical properties selected to be tolerant of elevation differences associated with secondary features **24a, 24b** of the part **24** to be built on the PBF additive manufacturing system **20.** Using a recoater **42** having at least two regions **42a, 42b** with different mechanical properties can result in less post-processing for the part **24** and can increase the likelihood of a successful build campaign.

The optical array **48** can include one or more energy sources **(48a-n)** to provide energy to form a melt pool (not shown) in the powder bed **50** that is selectively sintered and consolidated to form the continuous, helical layer of the part **24.** The individual energy sources **48a-n** can be lasers, such as laser diodes, electron beam sources, or other appropriate energy sources. For many applications, it may be desirable for the optical array **48** to include a plurality of energy sources **48a-n** to provide coverage for the entire operative radius of the build plate **22** (i.e., across the entire space between the walls **26** of the build plate **22).** As discussed further below, each of the plurality of energy sources 48a-n should be tuned with respect to the radial location of the individual energy sources **48a-n** to maintain a consistent melt pool across the radius (i.e., the full build area **26c)** of the annular build plate **22.**

The gas manifold **46** blows an inert gas across the optical array **48** to diffuse the soot generated from the consolidated material. The inert gas may be nitrogen or any other inert gas suitable for the PBF additive manufacturing environment. The gas manifold **46** should be positioned to dispense inert gas to mitigate contamination to the optical array **48** and melt pool from soot or airborne build powder.

Fig. 8 shows a schematic of the optical array **48** in more detail, including individual energy sources **48a-n.** Although, Fig. 8 shows ten individual energy sources, any number ("n") of individual energy sources may be used-hence, this application uses the nomenclature **48a-n** to represent the individual energy sources. The plurality of individual energy sources **48a-n** is distributed radially over the build area **26c** of the build plate **22** such that the individual energy sources **48a-n** irradiate overlapping portions of the build area **26c.** The individual energy sources **48a-n** may be lasers, such as laser diodes, electron beam sources, or any other energy sources deemed appropriate for use in the PBF additive manufacture system **20.** The rotating annular build plate **22** creates a demanding challenge for the optical array **48** due to the varying tangential velocity of the powder bed **50** across the radius of the build plate **22.** As can be appreciated, when the annular build plate **22** rotates at a constant velocity the tangential velocity at the inner radius of the powder bed **50** is slower than at the outer radius of the powder bed **50.** If the optical array **48** is configured to deliver constant power across the powder bed **50,** the powder bed **50** will experience more effective energy at the inner radius than at the outer radius. This phenomenon could result in an inconsistent melt pool across the powder bed **50** radius, leading to inconsistent consolidation of the part **24** across the powder bed **50** radius. Accordingly, the power of the energy sources **48a-n** in the optical array **48** should be scaled with respect to radial location to maintain constant effective energy density delivery across the radius of the powder bed **50.** This means that the individual energy sources **48a-n** in the optical array **48** will have differing power as a function of the location within the optical array **48.** Thus, as shown in Fig. 8, individual energy sources closer to the center of the build radius (i.e., closer to the inner radius of the powder bed **50)** should be configured to operate at a lower energy level than individual energy sources further from the center of the build radius (i.e., closer to the outer radius of the powder bed **50).**

To accommodate the rotational speed of the annular build plate **22,** the operating strength for each individual energy source **48a-n** in the optical array **48** should be determined based on the rotational speed of the annular build plate **22** and the specific geometry of the part **24** to be built during a specific build campaign. Fig. 9. Shows a notional zone of desirable operating conditions for energy source power versus scan speed of a PBF additive manufacturing system **20** having an annular-shaped build plate **26.** Because the multi-function build head **32** and the optical array **48** are generally stationary with regard to the rotating plane of the annular build plate **22,** the energy source scan speed should be understood to be the tangential velocity of the build powder bed 50 at the radial location within the "view" of each individual energy source **48a-n** in the optical array **48.** Fig. 9 shows four zones of potential operation for the energy sources in the optical array **48:**
- Zone 1: the desired operating zone in which the energy source power is tuned to deliver a desired amount of energy based on scan speed (i.e., local tangential velocity) to melt and fuse the build powder to form fully consolidated layers (the "Just Right" zone)
- Zone 2: a zone in which the energy source delivers insufficient energy too quickly in view of the scan speed (i.e., local tangential velocity) such that the local conditions are too cold for desirable melting and fusing of the build powder and layers (the "Too Cold" zone)
- Zone 3: a zone in which the scan speed (i.e., local tangential velocity) is too fast to allow the build powder to absorb the energy source energy being delivered to the powder bed, leading to undesirable melting and fusing of the build powder and layers (the "Too Fast" zone)
- Zone 4: a zone in which the energy source delivers too much energy in view of the scan speed (i.e., local tangential velocity) such that the local conditions are hot for desirable melting and fusing of the build powder and layers (the "Too Hot" zone)
As can be appreciated, each energy source **48a-n** in the optical array **48** should be tuned to operate within Zone 1 based on the parameters of each specific build campaign.

Fig. 10 is a schematic of an integrated X-ray computed tomography (CT or CAT) scan system **34,** including an X-ray emitter or X-ray scan head **34a** and an X-ray detector **34b,** for use in a PBF additive manufacturing system **20** having an annular-shaped build plate **22.** The X-ray scan head **34a** includes an X-ray source of suitable power to penetrate the part **24** and side walls **26** of the build plate **22.** For example, X-ray source may be 300 kV or any other power level deemed appropriate for the application. The X-ray detector **34b** can be any suitable x-ray detector useful in an X-ray CT system that provides sufficient resolution to provide desired information about the part **24** as it progresses through the build campaign. The integrated X-ray CT system **34** works by having an X-ray scan head **34a** located after the build head **32** (i.e., "downstream" of the build head **32** in the annular build plate's **22** direction of rotation) on the outer diameter of the annular build plate **22** with an X-ray detector **34b** on the inner diameter with a linear path intersecting the part **24** such that the X-ray scan head **34a** directs X-ray energy through the part **24** to the X-ray detector **34b.** If the PBF additive manufacturing system **20** includes more than one build head **32,** the PBF additive manufacturing system **20** can include a single X-ray CT system **34** positioned at an advantageous location with regard to the build plate **22** or may include more than one X-ray CT system **34.** The X-ray detector **34b** receives X-ray energy as it exits the part **24** to form an image of part **24** that can be examined manually or automatically for defects. The X-Ray CT system **34** can perform imaging of the part **24** in-situ during the build campaign as the annular build plate **22** rotates. If the X-Ray CT system **34** detects defects in the part **24** during the build campaign, the operator can be presented with various options to be implemented manually or automatically through controller **36.** These options include varying the build campaign operating parameters as discussed below (e.g., power to individual energy sources **48a-n,** rotational speed and/or height of the annular build plate **22,** translation of the build head **32,** operation of the powder dispensing mechanism **40,** operation of the powder heating element **44,** or any other operating parameters) to account for the identified defect(s) in the part **24** or, if the defect is serious enough, terminating the build campaign and manually reworking the part **24** or even scrapping the part **24.**

The X-Ray CT scanning can also be decoupled from the build process if a final high-resolution scan needs to be taken once excess build powder has been evacuated from the part **24** but with the part **24** still affixed to the annular build plate **22.** The post-build X-Ray CT scan could take place at a slower speed and/or higher resolution than might be convenient for the in-process scans discussed above and could form a portion of the final inspection of the part **24.** Such an operation permits both in-process inspection of the part **24** during the build campaign and post-build inspection for part **24.**

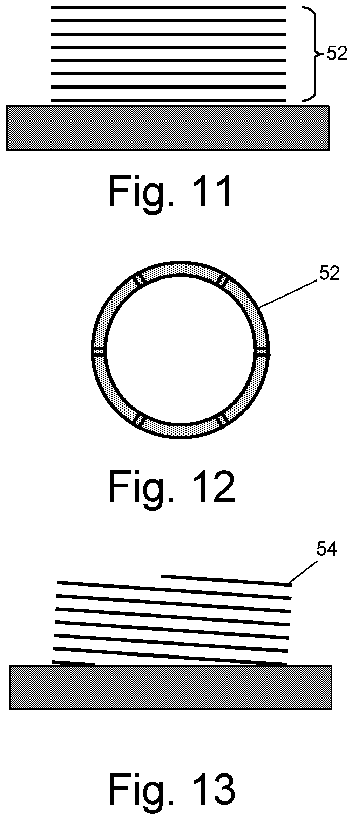

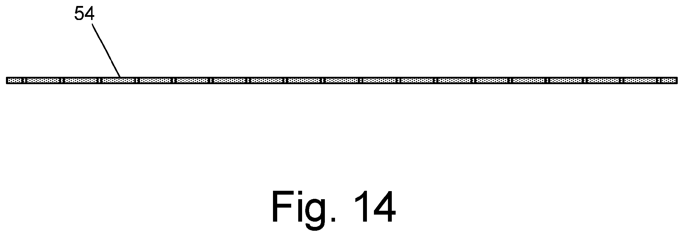

Using a rotating, annular build plate **22** as disclosed results in a unique layer structure in the part **24** compared with parts made with conventional PBF additive manufacturing processes. With a conventional PBF additive manufacturing system, parts have a "stacked" layer configuration as shown schematically in Figs. 11 ("stacked" layers **52)** and 13 (an overhead view of a single layer **52)** in which a plurality of individual layers **52** are stacked and consolidated. Each of the plurality of individual layers **52** is oriented "parallel" with the build plate **22** on which the part **24** is formed. Using the disclosed PBF additive manufacturing system **20** with rotating, annular build plate **22** coupled with timed ascent or descent of the build head **32** or annular build plate **22,** respectively, the part **24** has a continuous, single layer **54** that is "pitched" with respect to the build plate **22** on which the part **24** is formed. As shown schematically in Fig. 13, the continuous, single layer **54** is helically overlapped on itself across the entire (stacking axis) thickness of the part **24** because of the continually rotating build plate **22.** The pitch of the continuous, single layer **54** is determined by the height of the build powder layer used for a particular portion of the build campaign and the rotational speed of the rotating, annular build plate **22.** If "unwrapped," the single, helically-distributed layer **54** would form a continuous linear ribbon as shown in Fig. 14. Conceptualizing the single, helically-distributed layer **54** as a continuous linear ribbon can help define the tool path required for the optical array **48** to consolidate the build powder effectively. The curvature of the part **24** is handled by the rotation of the annular build plate **22** and is not part of the energy source scan consideration when determining appropriate power levels for individual energy sources **48a-n** in the optical array **48.** The single, helically-distributed layer **54** of part **24** should be detectible after consolidation as an artifact of the disclosed PBF additive manufacturing process.

Although not a focus of this disclosure, a person of ordinary skill will recognize that the disclosed PBF additive manufacturing system **20** relies on a controller **36** to control the rotation and height of the annular build plate **22** by rotating and translating the build piston **28,** which in turn controls the local thickness and pitch of the continuous, helical layer that forms the part **24.** Controller **36** also controls the operation of the build head **32,** including the dispensing of build powder from powder dispensing mechanism **40** and the operation of the powder heating element **44,** gas manifold **46,** and optical array **48** as discussed above. For example, the controller **36** controls PBF system **20** operating parameters, including:
(1) energy source power, velocity, and spot size, build plate temperature, and layer thickness;
(2) temperature-dependent thermophysical properties of the powder;
(3) feedstock properties including average powder particle size; and
(4) energy source hatching strategy including hatch distance, hatch delay time, and stripe width.

The PBF system **20** can be used with a variety of build powders to produce part **24.** For example, the powder can be a metal powder or polymeric powder. Metallic powders compatible with typical PBF systems **20** include aluminum, aluminum alloys (e.g., aluminum-lithium alloys), titanium, nickel, nickel alloys, and other metals and alloys known in the art. Polymeric powders compatible with typical PBF systems **20** include a wide variety of polymers as known in the art.

## Claims

1. An annular build plate (22) for a powder bed fusion, PBF, additive manufacturing system (20), the build plate (22) comprising:
an inner radius wall (26a); and
an outer radius wall (26b), wherein the inner radius wall (26a) and the outer radius wall (26b) extend vertically to define a build area (26c) on the annular build plate (22) between the inner radius wall (26a) and the outer radius wall (26b),
**characterised in that**:
the inner radius wall (26a) and the outer radius wall (26b) each include a plurality of apertures (26d) that are configured to collect excess build powder and direct the excess build powder through the inner radius wall (26a) and outer radius wall (26b) to an excess build powder reservoir (26e); and
the annular build plate (22) is configured to be positioned on a build piston (28) and to move in concert with the build piston (28) that is configured to rotate around a drive shaft (30) in a continuous circular motion and to translate up and down.

2. A powder bed fusion, PBF, additive manufacturing system (20), comprising:
the annular build plate (22) of claim 1; and
a build piston (28) configured to rotate around a drive shaft (30) in a continuous circular motion and to translate axially, wherein the annular build plate (22) is positioned on the build piston (28) and arranged to move in concert with the build piston (28).

3. The PBF additive manufacturing system (20) or build plate (22) of claim 1 or 2, further comprising a plurality of seals (26g) positioned at junctions (26f) between the inner radius wall (26a) and the outer radius wall (26b) and another portion of the annular build plate (22), wherein the plurality of seals (26g) are configured to prevent build powder migrating out of the build area (26c) through the junctions (26f).

4. The PBF additive manufacturing system (20) or build plate (22) of claim 1, 2 or 3, wherein the plurality of apertures (26d) in the inner radius wall (26a) and the outer radius wall (26b) extend vertically through the inner radius wall (26a) and the outer radius wall (26b) to direct the excess build powder to the excess build powder reservoir (26e).

5. The PBF additive manufacturing system (20) of claim 2, 3 or 4, wherein the excess build powder reservoir (26e) is mounted to the build piston (28) to permit collection of the excess build powder when the PBF additive manufacturing system (20) is in operation.

6. The PBF additive manufacturing system (20) of any of claims 2 to 5, further comprising:
a build powder delivery mechanism configured to deliver build powder to the build area (26c) to form a build powder bed (50) when the PBF additive manufacturing system (20) is in operation;
a recoater (42) configured to provide even distribution of the build powder in the build powder bed (50) when the PBF additive manufacturing system (20) is in operation, wherein the recoater (42) is configured to direct excess build powder into the plurality of apertures (26d) in the inner radius wall (26a) and the outer radius wall (26b); and
an optical array (48) positioned over the build area (26c) on the build plate (22), wherein the optical array (48) is configured to project energy onto the build powder bed (50) to form a melt pool in the build powder bed (50) when the PBF additive manufacturing system (20) is in operation.

7. The PBF additive manufacturing system (20) of claim 6, wherein the optical array (48) includes a plurality of energy sources configured to project energy onto the build powder bed (50), optionally wherein the plurality of energy sources comprises lasers or electron beam sources.

8. The PBF additive manufacturing system (20) of claim 6 or 7, further comprising a build powder preheater configured to preheat build powder after distribution by the recoater (42) and before formation of the melt pool.

9. The PBF additive manufacturing system (20) of any of claims 2 to 5, further comprising a build head (32) that includes:
a powder delivery mechanism configured to deliver build powder to the build area (26c) to form a build powder bed (50) when the PBF additive manufacturing system (20) is in operation;
a recoater (42) configured to provide an even distribution of the build powder in the build powder bed (50) when the PBF additive manufacturing system (20) is in operation, wherein the recoater (42) is configured to direct excess build powder into the plurality of apertures (26d) in the inner radius wall (26a) and the outer radius wall (26b);
a build powder preheater configured to preheat build powder after distribution by the recoater and before formation of the melt pool;
an optical array (48) positioned over the build area (26c) on the build plate (22), wherein the optical array (48) is configured to project energy onto the build powder bed (50) to form a melt pool in the build powder bed (50) when the PBF additive manufacturing system (20) is in operation; and
a gas manifold (46) configured to direct a flow of inert gas across the optical array (48) when the PBF additive manufacturing system (20) is in operation.

10. The PBF additive manufacturing system (20) of claim 9, wherein the optical array (48) includes a plurality of energy sources configured to project energy onto the build powder bed (50), optionally wherein the plurality of energy sources comprises lasers or electron beam sources.

11. A method of making an annular part with a powder bed fusion, PBF, additive manufacturing system (20), comprising:
installing in the PBF additive manufacturing system (20) an annular build plate (22) including an inner radius wall (26a) and an outer radius wall (26b), wherein the inner radius wall (26a) and the outer radius wall (26b) extend vertically from a junction (26f) with the annular build plate (22) to define a build area (26c) on the annular build plate (22) between the inner radius wall (26a) and the outer radius wall (26b) and the inner radius wall (26a) and the outer radius wall (26b) each include a plurality of apertures (26d) that are configured to collect excess build powder and direct the excess build powder through the inner radius wall (26a) and outer radius wall (26b) to an excess build powder reservoir (26e);
delivering, with a powder delivery mechanism, build powder to the build area (26c) to form a build powder bed (50) while the build plate (22) rotates;
distributing, with a recoater (42), the build powder in the build powder bed (50) to provide even distribution of the build powder in the build powder bed (50) while the build plate (22) rotates, wherein the recoater (42) is configured to direct excess build powder into the plurality of apertures (26d) in the inner radius wall (26a) and the outer radius wall (26b);
collecting, with plurality of apertures (26d) in the inner radius wall and the outer radius wall, excess build powder;
directing, with plurality of apertures (26d) in the inner radius wall and the outer radius wall, the excess build powder to the excess build powder reservoir (26e);
directing energy, from an optical array (48) positioned over the build area (26c) on the build plate (22), to the build powder in the build powder bed (50) to form a melt pool in the build powder bed (50) while the build plate rotates (22); and
selectively sintering, using energy from the optical array (48), build powder from the melt pool to form a layer of a consolidated part while the build plate (22) rotates, optionally wherein the energy from the optical array (48) is generated by a plurality of lasers or a plurality of electron beam sources.

12. The method of making an annular part of claim 11, further comprising translating, with a build piston (28), the build plate (22) down from an initial position and rotating, with the build piston (28), the build plate (22) as build powder from the melt pool is selectively sintered to maintain a predetermined thickness for the layer of the consolidated part.

13. The method of making an annular part of claim 11 or 12, further comprising preheating, with a build powder preheater, the build powder after distribution by the recoater (42) and before formation of the melt pool.

14. The method of making an annular part of any of claims 11 to 13, further comprising directing, with a gas manifold (46), a flow of inert gas across the optical array (48) to diffuse soot generated from consolidating build powder.

15. The method of making an annular part of any of claims 11 to 14, further comprising analyzing the excess build powder collected in the excess build powder reservoir (26e) for potential reuse.

## Patentansprüche

1. Eine ringförmige Bauplattform (22) für ein Pulverbettschmelz-Additiv-Fertigungssystem, PBF-Additiv-Fertigungssystem (20), wobei die Bauplattform (22) umfasst:
eine Innenradiuswand (26a); und
eine Außenradiuswand (26b), wobei sich die Innenradiuswand (26a) und die Außenradiuswand (26b) vertikal erstrecken, um einen Baubereich (26c) auf der ringförmigen Bauplattform (22) zwischen der Innenradiuswand (26a) und der Außenradiuswand (26b) zu definieren, **dadurch gekennzeichnet, dass**:
die Innenradiuswand (26a) und die Außenradiuswand (26b) jeweils eine Vielzahl von Öffnungen (26d) aufweisen, die dazu konfiguriert sind, überschüssiges Baupulver zu sammeln und das überschüssige Baupulver durch die Innenradiuswand (26a) und die Außenradiuswand (26b) zu einem Überschuss-Baupulver-Reservoir (26e) zu leiten; und
die ringförmige Bauplattform (22) dazu konfiguriert ist, auf einem Bau-Kolben (28) positioniert zu werden und sich zusammen mit dem Bau-Kolben (28) zu bewegen, der dazu konfiguriert ist, sich um eine Antriebswelle (30) in einer kontinuierlichen Kreisbewegung zu drehen und sich nach oben und unten zu bewegen.

2. Ein Pulverbettschmelz-Additiv-Fertigungssystem, PBF-Additiv-Fertigungssystem (20), umfassend:
die ringförmige Bauplattform (22) nach Anspruch 1; und
einen Bau-Kolben (28), der dazu konfiguriert ist, sich um eine Antriebswelle (30) in einer kontinuierlichen Kreisbewegung zu drehen und sich axial zu bewegen, wobei die ringförmige Bauplattform (22) auf dem Bau-Kolben (28) positioniert ist und so angeordnet ist, dass sie sich zusammen mit dem Bau-Kolben (28) bewegt.

3. Das PBF-Additiv-Fertigungssystem (20) oder die Bauplattform (22) nach Anspruch 1 oder 2, ferner umfassend eine Vielzahl von Dichtungen (26g), die an Verbindungsstellen (26f) zwischen der Innenradiuswand (26a) und der Außenradiuswand (26b) und einem anderen Abschnitt der ringförmigen Bauplattform (22) positioniert sind, wobei die Vielzahl von Dichtungen (26g) dazu konfiguriert sind, ein Wandern von Baupulver aus dem Baubereich (26c) durch die Verbindungsstellen (26f) zu verhindern.

4. Das PBF-Additiv-Fertigungssystem (20) oder die Bauplattform (22) nach Anspruch 1, 2 oder 3, wobei sich die Vielzahl von Öffnungen (26d) in der Innenradiuswand (26a) und der Außenradiuswand (26b) vertikal durch die Innenradiuswand (26a) und die Außenradiuswand (26b) erstrecken, um das überschüssige Baupulver zu dem Überschuss-Baupulver-Reservoir (26e) zu leiten.

5. Das PBF-Additiv-Fertigungssystem (20) nach Anspruch 2, 3 oder 4, wobei das Überschuss-Baupulver-Reservoir (26e) an dem Bau-Kolben (28) montiert ist, um ein Sammeln des überschüssigen Baupulvers zu ermöglichen, wenn das PBF-Additiv-Fertigungssystem (20) in Betrieb ist.

6. Das PBF-Additiv-Fertigungssystem (20) nach einem der Ansprüche 2 bis 5, ferner umfassend:
einen Baupulver-Zuführmechanismus, der dazu konfiguriert ist, Baupulver zu dem Baubereich (26c) zuzuführen, um ein Baupulverbett (50) zu bilden, wenn das PBF-Additiv-Fertigungssystem (20) in Betrieb ist;
einen Beschichter (42), der dazu konfiguriert ist, eine gleichmäßige Verteilung des Baupulvers in dem Baupulverbett (50) bereitzustellen, wenn das PBF-Additiv-Fertigungssystem (20) in Betrieb ist, wobei der Beschichter (42) dazu konfiguriert ist, überschüssiges Baupulver in die Vielzahl von Öffnungen (26d) in der Innenradiuswand (26a) und der Außenradiuswand (26b) zu leiten; und
eine optische Anordnung (48), die über dem Baubereich (26c) auf der Bauplattform (22) positioniert ist, wobei die optische Anordnung (48) dazu konfiguriert ist, Energie auf das Baupulverbett (50) zu projizieren, um ein Schmelzbad in dem Baupulverbett (50) zu bilden, wenn das PBF-Additiv-Fertigungssystem (20) in Betrieb ist.

7. Das PBF-Additiv-Fertigungssystem (20) nach Anspruch 6, wobei die optische Anordnung (48) eine Vielzahl von Energiequellen umfasst, die dazu konfiguriert sind, Energie auf das Baupulverbett (50) zu projizieren, wobei optional die Vielzahl von Energiequellen Laser oder Elektronenstrahlquellen umfasst.

8. Das PBF-Additiv-Fertigungssystem (20) nach Anspruch 6 oder 7, ferner umfassend einen Baupulver-Vorwärmer, der dazu konfiguriert ist, Baupulver nach der Verteilung durch den Beschichter (42) und vor der Bildung des Schmelzbads vorzuwärmen.

9. Das PBF-Additiv-Fertigungssystem (20) nach einem der Ansprüche 2 bis 5, ferner umfassend einen Baukopf (32), der Folgendes umfasst:
einen Pulver-Zuführmechanismus, der dazu konfiguriert ist, Baupulver zu dem Baubereich (26c) zuzuführen, um ein Baupulverbett (50) zu bilden, wenn das PBF-Additiv-Fertigungssystem (20) in Betrieb ist;
einen Beschichter (42), der dazu konfiguriert ist, eine gleichmäßige Verteilung des Baupulvers in dem Baupulverbett (50) bereitzustellen, wenn das PBF-Additiv-Fertigungssystem (20) in Betrieb ist, wobei der Beschichter (42) dazu konfiguriert ist, überschüssiges Baupulver in die Vielzahl von Öffnungen (26d) in der Innenradiuswand (26a) und der Außenradiuswand (26b) zu leiten;
einen Baupulver-Vorwärmer, der dazu konfiguriert ist, Baupulver nach der Verteilung durch den Beschichter und vor der Bildung des Schmelzbads vorzuwärmen;
eine optische Anordnung (48), die über dem Baubereich (26c) auf der Bauplattform (22) positioniert ist, wobei die optische Anordnung (48) dazu konfiguriert ist, Energie auf das Baupulverbett (50) zu projizieren, um ein Schmelzbad in dem Baupulverbett (50) zu bilden, wenn das PBF-Additiv-Fertigungssystem (20) in Betrieb ist; und
einen Gasverteiler (46), der dazu konfiguriert ist, einen Strom von Inertgas über die optische Anordnung (48) zu leiten, wenn das PBF-Additiv-Fertigungssystem (20) in Betrieb ist.

10. Das PBF-Additiv-Fertigungssystem (20) nach Anspruch 9, wobei die optische Anordnung (48) eine Vielzahl von Energiequellen umfasst, die dazu konfiguriert sind, Energie auf das Baupulverbett (50) zu projizieren, wobei optional die Vielzahl von Energiequellen Laser oder Elektronenstrahlquellen umfasst.

11. Ein Verfahren zur Herstellung eines ringförmigen Teils mit einem Pulverbettschmelz-Additiv-Fertigungssystem, PBF-Additiv-Fertigungssystem (20), umfassend:
Installieren, in dem PBF-Additiv-Fertigungssystem (20), einer ringförmigen Bauplattform (22), die eine Innenradiuswand (26a) und eine Außenradiuswand (26b) umfasst, wobei sich die Innenradiuswand (26a) und die Außenradiuswand (26b) vertikal von einer Verbindungsstelle (26f) mit der ringförmigen Bauplattform (22) erstrecken, um einen Baubereich (26c) auf der ringförmigen Bauplattform (22) zwischen der Innenradiuswand (26a) und der Außenradiuswand (26b) zu definieren, und wobei die Innenradiuswand (26a) und die Außenradiuswand (26b) jeweils eine Vielzahl von Öffnungen (26d) aufweisen, die dazu konfiguriert sind, überschüssiges Baupulver zu sammeln und das überschüssige Baupulver durch die Innenradiuswand (26a) und die Außenradiuswand (26b) zu einem Überschuss-Baupulver-Reservoir (26e) zu leiten;
Zuführen, mit einem Baupulver-Zuführmechanismus, von Baupulver zu dem Baubereich (26c), um ein Baupulverbett (50) zu bilden, während sich die Bauplattform (22) dreht;
Verteilen, mit einem Beschichter (42), des Baupulvers in dem Baupulverbett (50), um eine gleichmäßige Verteilung des Baupulvers in dem Baupulverbett (50) bereitzustellen, während sich die Bauplattform (22) dreht, wobei der Beschichter (42) dazu konfiguriert ist, überschüssiges Baupulver in die Vielzahl von Öffnungen (26d) in der Innenradiuswand (26a) und der Außenradiuswand (26b) zu leiten;
Sammeln, mit der Vielzahl von Öffnungen (26d) in der Innenradiuswand und der Außenradiuswand, von überschüssigem Baupulver;
Leiten, mit der Vielzahl von Öffnungen (26d) in der Innenradiuswand und der Außenradiuswand, des überschüssigen Baupulvers zu dem Überschuss-Baupulver-Reservoir (26e);
Richten von Energie, von einer optischen Anordnung (48), die über dem Baubereich (26c) auf der Bauplattform (22) positioniert ist, auf das Baupulver in dem Baupulverbett (50), um ein Schmelzbad in dem Baupulverbett (50) zu bilden, während sich die Bauplattform (22) dreht; und
selektives Sintern, unter Verwendung von Energie von der optischen Anordnung (48), von Baupulver aus dem Schmelzbad, um eine Schicht eines konsolidierten Teils zu bilden, während sich die Bauplattform (22) dreht,
wobei optional die Energie von der optischen Anordnung (48) durch eine Vielzahl von Lasern oder eine Vielzahl von Elektronenstrahlquellen erzeugt wird.

12. Das Verfahren zur Herstellung eines ringförmigen Teils nach Anspruch 11, ferner umfassend das Übersetzen, mit einem Bau-Kolben (28), der Bauplattform (22) nach unten von einer Anfangsposition und das Drehen, mit dem Bau-Kolben (28), der Bauplattform (22), während Baupulver aus dem Schmelzbad selektiv gesintert wird, um eine vorbestimmte Dicke für die Schicht des konsolidierten Teils aufrechtzuerhalten.

13. Das Verfahren zur Herstellung eines ringförmigen Teils nach Anspruch 11 oder 12, ferner umfassend das Vorwärmen, mit einem Baupulver-Vorwärmer, des Baupulvers nach der Verteilung durch den Beschichter (42) und vor der Bildung des Schmelzbads.

14. Das Verfahren zur Herstellung eines ringförmigen Teils nach einem der Ansprüche 11 bis 13, ferner umfassend das Leiten, mit einem Gasverteiler (46), eines Stroms von Inertgas über die optische Anordnung (48), um Ruß, der aus der Konsolidierung von Baupulver erzeugt wird, zu verteilen.

15. Das Verfahren zur Herstellung eines ringförmigen Teils nach einem der Ansprüche 11 bis 14, ferner umfassend das Analysieren des in dem Überschuss-Baupulver-Reservoir (26e) gesammelten überschüssigen Baupulvers auf potenzielle Wiederverwendung.

## Revendications

1. Plateau de construction annulaire (22) pour un système de fabrication additive par fusion sur lit de poudre, PBF, (20), le plateau de construction (22) comprenant :
une paroi de rayon intérieur (26a) ; et
une paroi de rayon extérieur (26b), dans lequel la paroi de rayon intérieur (26a) et la paroi de rayon extérieur (26b) s'étendent verticalement pour définir une zone de construction (26c) sur le plateau de construction annulaire (22) entre la paroi de rayon intérieur (26a) et la paroi de rayon extérieur (26b),
**caractérisé en ce que** :
la paroi de rayon intérieur (26a) et la paroi de rayon extérieur (26b) comportent chacune une pluralité d'ouvertures (26d) qui sont configurées pour collecter la poudre de construction excédentaire et diriger la poudre de construction excédentaire à travers la paroi de rayon intérieur (26a) et la paroi de rayon extérieur (26b) vers un réservoir de poudre de construction excédentaire (26e) ; et
le plateau de construction annulaire (22) est configuré pour être positionné sur un piston de construction (28) et pour se déplacer de concert avec le piston de construction (28) qui est configuré pour tourner autour d'un arbre d'entraînement (30) selon un mouvement circulaire continu et pour se translater vers le haut et vers le bas.

2. Système de fabrication additive par fusion sur lit de poudre, PBF, (20), comprenant :
le plateau de construction annulaire (22) de la revendication 1 ; et
un piston de construction (28) configuré pour tourner autour d'un arbre d'entraînement (30) selon un mouvement circulaire continu et pour se translater axialement, dans lequel le plateau de construction annulaire (22) est positionné sur le piston de construction (28) et agencé pour se déplacer de concert avec le piston de construction (28).

3. Le système de fabrication additive PBF (20) ou le plateau de construction (22) de la revendication 1 ou 2, comprenant en outre une pluralité de joints d'étanchéité (26g) positionnés au niveau de jonctions (26f) entre la paroi de rayon intérieur (26a) et la paroi de rayon extérieur (26b) et une autre partie du plateau de construction annulaire (22), dans lequel la pluralité de joints d'étanchéité (26g) sont configurés pour empêcher la migration de poudre de construction hors de la zone de construction (26c) à travers les jonctions (26f).

4. Le système de fabrication additive PBF (20) ou le plateau de construction (22) de la revendication 1, 2 ou 3, dans lequel la pluralité d'ouvertures (26d) dans la paroi de rayon intérieur (26a) et la paroi de rayon extérieur (26b) s'étendent verticalement à travers la paroi de rayon intérieur (26a) et la paroi de rayon extérieur (26b) pour diriger la poudre de construction excédentaire vers le réservoir de poudre de construction excédentaire (26e).

5. Le système de fabrication additive PBF (20) de la revendication 2, 3 ou 4, dans lequel le réservoir de poudre de construction excédentaire (26e) est monté sur le piston de construction (28) pour permettre la collecte de la poudre de construction excédentaire lorsque le système de fabrication additive PBF (20) est en fonctionnement.

6. Le système de fabrication additive PBF (20) de l'une quelconque des revendications 2 à 5, comprenant en outre :
un mécanisme d'acheminement de poudre de construction configuré pour délivrer de la poudre de construction à la zone de construction (26c) pour former un lit de poudre de construction (50) lorsque le système de fabrication additive PBF (20) est en fonctionnement ;
un dispositif de recouvrement (42) configuré pour assurer une distribution uniforme de la poudre de construction dans le lit de poudre de construction (50) lorsque le système de fabrication additive PBF (20) est en fonctionnement, dans lequel le dispositif de recouvrement (42) est configuré pour diriger la poudre de construction excédentaire dans la pluralité d'ouvertures (26d) dans la paroi de rayon intérieur (26a) et la paroi de rayon extérieur (26b) ; et
un réseau optique (48) positionné au-dessus de la zone de construction (26c) sur le plateau de construction (22), dans lequel le réseau optique (48) est configuré pour projeter de l'énergie sur le lit de poudre de construction (50) pour former un bain de fusion dans le lit de poudre de construction (50) lorsque le système de fabrication additive PBF (20) est en fonctionnement.

7. Le système de fabrication additive PBF (20) de la revendication 6, dans lequel le réseau optique (48) comprend une pluralité de sources d'énergie configurées pour projeter de l'énergie sur le lit de poudre de construction (50), éventuellement dans lequel la pluralité de sources d'énergie comprend des lasers ou des sources de faisceaux d'électrons.

8. Le système de fabrication additive PBF (20) de la revendication 6 ou 7, comprenant en outre un préchauffeur de poudre de construction configuré pour préchauffer la poudre de construction après distribution par le dispositif de recouvrement (42) et avant la formation du bain de fusion.

9. Le système de fabrication additive PBF (20) de l'une quelconque des revendications 2 à 5, comprenant en outre une tête de construction (32) qui comporte :
un mécanisme d'acheminement de poudre configuré pour délivrer de la poudre de construction à la zone de construction (26c) pour former un lit de poudre de construction (50) lorsque le système de fabrication additive PBF (20) est en fonctionnement ;
un dispositif de recouvrement (42) configuré pour assurer une distribution uniforme de la poudre de construction dans le lit de poudre de construction (50) lorsque le système de fabrication additive PBF (20) est en fonctionnement, dans lequel le dispositif de recouvrement (42) est configuré pour diriger la poudre de construction excédentaire dans la pluralité d'ouvertures (26d) dans la paroi de rayon intérieur (26a) et la paroi de rayon extérieur (26b) ;
un préchauffeur de poudre de construction configuré pour préchauffer la poudre de construction après distribution par le dispositif de recouvrement et avant la formation du bain de fusion ;
un réseau optique (48) positionné au-dessus de la zone de construction (26c) sur le plateau de construction (22), dans lequel le réseau optique (48) est configuré pour projeter de l'énergie sur le lit de poudre de construction (50) pour former un bain de fusion dans le lit de poudre de construction (50) lorsque le système de fabrication additive PBF (20) est en fonctionnement ; et
un collecteur de gaz (46) configuré pour diriger un flux de gaz inerte à travers le réseau optique (48) lorsque le système de fabrication additive PBF (20) est en fonctionnement.

10. Le système de fabrication additive PBF (20) de la revendication 9, dans lequel le réseau optique (48) comprend une pluralité de sources d'énergie configurées pour projeter de l'énergie sur le lit de poudre de construction (50), éventuellement dans lequel la pluralité de sources d'énergie comprend des lasers ou des sources de faisceaux d'électrons.

11. Procédé de fabrication d'une pièce annulaire avec un système de fabrication additive par fusion sur lit de poudre, PBF, (20), comprenant :
l'installation dans le système de fabrication additive PBF (20) d'un plateau de construction annulaire (22) comportant une paroi de rayon intérieur (26a) et une paroi de rayon extérieur (26b), dans lequel la paroi de rayon intérieur (26a) et la paroi de rayon extérieur (26b) s'étendent verticalement à partir d'une jonction (26f) avec le plateau de construction annulaire (22) pour définir une zone de construction (26c) sur le plateau de construction annulaire (22) entre la paroi de rayon intérieur (26a) et la paroi de rayon extérieur (26b) et la paroi de rayon intérieur (26a) et la paroi de rayon extérieur (26b) comportent chacune une pluralité d'ouvertures (26d) qui sont configurées pour collecter la poudre de construction excédentaire et diriger la poudre de construction excédentaire à travers la paroi de rayon intérieur (26a) et la paroi de rayon extérieur (26b) vers un réservoir de poudre de construction excédentaire (26e) ;
l'acheminement, avec un mécanisme d'acheminement de poudre, de poudre de construction vers la zone de construction (26c) pour former un lit de poudre de construction (50) tandis que le plateau de construction (22) tourne ;
la distribution, avec un dispositif de recouvrement (42), de la poudre de construction dans le lit de poudre de construction (50) pour assurer une distribution uniforme de la poudre de construction dans le lit de poudre de construction (50) tandis que le plateau de construction (22) tourne, dans lequel le dispositif de recouvrement (42) est configuré pour diriger la poudre de construction excédentaire dans la pluralité d'ouvertures (26d) dans la paroi de rayon intérieur (26a) et la paroi de rayon extérieur (26b) ;
la collecte, avec la pluralité d'ouvertures (26d) dans la paroi de rayon intérieur et la paroi de rayon extérieur, de la poudre de construction excédentaire ;
l'acheminement, avec la pluralité d'ouvertures (26d) dans la paroi de rayon intérieur et la paroi de rayon extérieur, de la poudre de construction excédentaire vers le réservoir de poudre de construction excédentaire (26e) ;
la direction de l'énergie, à partir d'un réseau optique (48) positionné au-dessus de la zone de construction (26c) sur le plateau de construction (22), vers la poudre de construction dans le lit de poudre de construction (50) pour former un bain de fusion dans le lit de poudre de construction (50) tandis que le plateau de construction (22) tourne ; et
le frittage sélectif, à l'aide de l'énergie provenant du réseau optique (48), de la poudre de construction issue du bain de fusion pour former une couche d'une pièce consolidée tandis que le plateau de construction (22) tourne,
éventuellement dans lequel l'énergie provenant du réseau optique (48) est générée par une pluralité de lasers ou une pluralité de sources de faisceaux d'électrons.

12. Le procédé de fabrication d'une pièce annulaire de la revendication 11, comprenant en outre la translation, avec un piston de construction (28), du plateau de construction (22) vers le bas à partir d'une position initiale et la rotation, avec le piston de construction (28), du plateau de construction (22) au fur et à mesure que la poudre de construction issue du bain de fusion est frittée sélectivement pour maintenir une épaisseur prédéterminée pour la couche de la pièce consolidée.

13. Le procédé de fabrication d'une pièce annulaire de la revendication 11 ou 12, comprenant en outre le préchauffage, avec un préchauffeur de poudre de construction, de la poudre de construction après distribution par le dispositif de recouvrement (42) et avant la formation du bain de fusion.

14. Le procédé de fabrication d'une pièce annulaire de l'une quelconque des revendications 11 à 13, comprenant en outre la direction, avec un collecteur de gaz (46), d'un flux de gaz inerte à travers le réseau optique (48) pour diffuser la suie générée par la consolidation de la poudre de construction.

15. Le procédé de fabrication d'une pièce annulaire de l'une quelconque des revendications 11 à 14, comprenant en outre l'analyse de la poudre de construction excédentaire collectée dans le réservoir de poudre de construction excédentaire (26e) en vue d'une éventuelle réutilisation.
